# EUROPÄISCHE PATENTSCHRIFT

(11) **EP 1 926 341 B1**
(45) Veröffentlichungstag und Bekanntmachung des Hinweises auf die Patenterteilung: **21.08.2013**
(21) Anmeldenummer: 07020483.9
(22) Anmeldetag: 19.10.2007
(51) Int. Cl.: H04Q 9/00, G01K 7/32, G01K 11/26

(54) **Verfahren zur Erkennung eines Fehlers in einem Messdurchlauf**
Method for detecting an error in a measurement run
Procédé de détection d'une erreur dans un processus de mesure

(30) Priorität: 22.11.2006 DE 102006055420
(43) Veröffentlichungstag der Anmeldung: 28.05.2008
(73) Patentinhaber: Miele & Cie. KG, 33332 Gütersloh (DE)
(72) Erfinder: Beier, Dominic, 33332 Gütersloh (DE)

(56) Entgegenhaltungen:
- WO-A2-03/089214
- WO-A2-2006/096854
- DE-A1-102005 015 028
- US-A- 5 942 991

## Beschreibung

Die Erfindung betrifft ein Verfahren zur Erkennung eines Fehlers in einem Messdurchlauf, bei dem eine Abfolge von elektrischen Signalen während des Durchlaufens eines vorher festgelegten Frequenzbandes drahtlos von einem Sender zu einem Empfänger einer elektrischen Auswerteschaltung einer Haushaltsgerätesteuerung übermittelt wird.

Um beispielsweise eine Garguttemperatur eines Garguts in einem Backofen zu erfassen und an eine Haushaltsgerätesteuerung weiterzuleiten ist es beispielsweise aus der DE 10 2005 015 028 bekannt, in eine Temperaturmesssonde integrierte Oberflächenwellenbauelemente mit hochfrequenten elektromagnetischen Wellen anzuregen, um über die von den Oberflächenwellenbauelementen zurückgestrahlten elektromagnetischen Wellen indirekt auf die Garguttemperatur schließen zu können. Dabei werden in der bekannten Haushaltsgerätesteuerung hochfrequente elektrische Signale erzeugt und mittels einer Sendeantenne in Richtung der Temperaturmesssonde als elektromagnetische Wellen abgestrahlt. Die von der Temperaturmesssonde zurückgestrahlten Wellen werden von der gleichzeitig als Empfangsantenne ausgebildeten Sendeantenne empfangen und an eine Auswerteschaltung weitergeleitet. Um nun von den empfangenen elektrischen Signalen auf die Garguttemperatur zu schließen, wird pro Temperaturmessung, also pro Messdurchlauf, ein vorher festgelegtes Frequenzband durchlaufen. Nacheinander werden elektrische Signale mit voneinander verschiedenen Frequenzen aus dem Frequenzband in der Haushaltsgerätesteuerung erzeugt, als elektromagnetische Wellen an die Temperaturmesssonde abgestrahlt und die davon zurückgestrahlten elektromagnetischen Wellen wiederum in elektrische Signale umgewandelt. Aus dem größten Signalpegel der dann vorliegenden elektrischen Signale und der diesem zugeordneten Sendefrequenz, bei der es sich um die Resonanzfrequenz handelt, wird dann indirekt die Garguttemperatur ermittelt.

Die Qualität der von der Temperaturmesssonde zurückgestrahlten elektromagnetischen Wellen und der daraus in der Auswerteschaltung der Haushaltsgerätesteuerung erzeugten elektrischen Signale hängt stark von den Kopplungseigenschaften zwischen der Temperaturmesssonde und der Haushaltsgerätesteuerung ab. Als Kopplungseigenschaften können beispielsweise sich ständig ändernde Umgebungsbedingungen, insbesondere in einem als Garraum ausgebildeten Behandlungsraum, sowie die Ausrichtung der Temperaturmesssonde, also von deren Antenne, zu der Empfangsantenne der Haushaltsgerätesteuerung genannt werden. In Abhängigkeit dieser und anderer möglicher Kopplungseigenschaften kann es bei dem bekannten Messdurchlauf zu einem Fehler in dem Messdurchlauf, also zur Übersteuerung oder Untersteuerung der von der Haushaltsgerätesteuerung empfangenen elektrischen Signale, kommen. Die Bestimmung der Garguttemperatur mit der wünschenswerten Genauigkeit ist in diesen Fällen nicht mehr sicher gewährleistet.

Der Erfindung stellt sich somit das Problem ein Verfahren anzugeben, das dem vorgenannten Nachteil entgegenwirkt, also mit dem Fehler der oben genannten Art in einem Messdurchlauf automatisch erkannt werden, um so die Qualität eines Messdurchlaufs zu bestimmen.

Erfindungsgemäß wird dieses Problem durch ein Verfahren mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere in der automatischen Erkennung eines Fehlers in einem Messdurchlauf.

Zwar ist aus der DE 102 48 698 A1 ein Verfahren zur automatischen Anpassung eines Signalpegels zwischen einem Eingang und einem Ausgang einer elektrischen Schaltung bekannt. Jedoch bezieht sich das bekannte Verfahren lediglich auf einzelne elektrische Signale und nicht auf einen erfindungsgemäßen Messdurchlauf, bei dem eine Abfolge von elektrischen Signalen bei dem Durchlaufen eines vorher festgelegten Frequenzbandes drahtlos von einem Sender an einen Empfänger einer elektrischen Auswerteschaltung einer Haushaltsgerätesteuerung übermittelt werden.

Eine besonders vorteilhafte Weiterbildung der Erfindung sieht vor, dass als Kennwert aus den Signalpegeln der Integral- oder Summenwert gebildet wird. Auf diese Weise ist das erfindungsgemäße Verfahren auf besonders einfache Art realisiert.

Eine hierzu alternative Weiterbildung sieht vor, dass der Kennwert aus einem Wertepaar aus den Signalpegeln und den zugeordneten Sendefrequenzen wie folgt gebildet wird, nämlich die Ermittlung des größten Signalpegels und der zugeordneten Resonanzfrequenz, die Ermittlung einer Grenzsendefrequenz, für die gilt, dass deren zugehöriger Signalpegel erstmals um ein vorher festgelegtes und abgespeichertes Signalpegelverhältnis niedriger als der größte Signalpegel liegt, die Ermittlung der Differenz zwischen der Grenzsendefrequenz und der Resonanzfrequenz, die Bildung des Wertepaares aus dem größten Signalpegel und der vorgenannten Differenz und die Bildung des Kennwertes in Abhängigkeit des Wertepaares. Beispielsweise ist das Verhältnis aus dem größten Signalpegel und der vorgenannten Differenz als Kennwert für die Signalqualität hierfür geeignet. Hierdurch ist die sichere Erkennung eines Fehlers in einem Messdurchlauf gewährleistet.

Eine weitere besonders vorteilhafte Weiterbildung sieht vor, dass wenn der Kennwert den unteren Grenzwert unterschreitet die Empfindlichkeit des Empfängers und/oder die Sendeleistung des Senders für einen weiteren Messdurchlauf erhöht wird/werden oder eine optische oder akustische Fehlermeldung an den Benutzer ausgegeben wird, wenn die Empfindlichkeit des Empfängers und/oder die Sendeleistung des Senders auf den jeweils maximalen Wert eingestellt sind. Auf diese Weise ist gewährleistet, dass ein Messdurchlauf, bei dem eine Untersteuerung vorliegt, nicht für den weiteren Programmablauf, also bei dem in Abhängigkeit des Messdurchlaufs der Normalbetrieb des Haushaltsgeräts beeinflusst wird, verwendet wird.

Eine andere Weiterbildung sieht vor, dass wenn der Kennwert den oberen Grenzwert überschreitet die Empfindlichkeit des Empfängers und/oder die Sendeleistung des Senders für einen weiteren Messdurchlauf reduziert wird/werden oder eine optische oder akustische Fehlermeldung an den Benutzer ausgegeben wird, wenn die Empfindlichkeit des Empfängers und/oder die Sendeleistung des Senders auf den jeweils minimalen Wert eingestellt sind. Hierdurch ist gewährleistet, dass ein Messdurchlauf, bei dem eine Übersteuerung vorliegt, nicht für den weiteren Programmablauf, also bei dem in Abhängigkeit des Messdurchlaufs der Normalbetrieb des Haushaltsgeräts beeinflusst wird, verwendet wird.

Eine weitere Weiterbildung sieht vor, dass der Messdurchlauf für den Normalbetrieb des Haushaltsgeräts verwendet wird, wenn der Kennwert im Bereich zwischen dem unteren und dem oberen Grenzwert liegt. Auf diese Weise ist gewährleistet, dass die Qualität des Messdurchlaufs ausreicht, um für den weiteren Programmablauf, also den Normalbetrieb des Haushaltsgeräts, verwendet zu werden.

Ein Ausführungsbeispiel der Erfindung ist in den Zeichnungen rein schematisch dargestellt und wird nachfolgend näher beschrieben. Es zeigt
- Figur 1: eine schematische Ansicht eines Haushaltsgerät, bei dem das erfindungsgemäße Verfahren verwendet wird,
- Figur 2: einen prinzipiellen Aufbau einer Haushaltsgerätesteuerung und eines Senders zur Durchführung des erfindungsgemäßen Verfahrens,
- Figur 3: ein Ablaufschema zu dem erfindungsgemäßen Verfahren,
- Figur 4: eine erste beispielhafte Darstellung des Verlaufs der Signalpegel eines Messdurchlaufs, bei dem der Kennwert im Bereich zwischen dem unteren und dem oberen Grenzwert liegt,
- Figur 5: eine zweite beispielhafte Darstellung des Verlaufs der Signalpegel eines Messdurchlaufs, bei dem der Kennwert oberhalb des oberen Grenzwerts liegt und
- Figur 6: eine dritte beispielhafte Darstellung des Verlaufs der Signalpegel eines Messdurchlaufs, bei dem der Kennwert unterhalb des unteren Grenzwerts liegt.

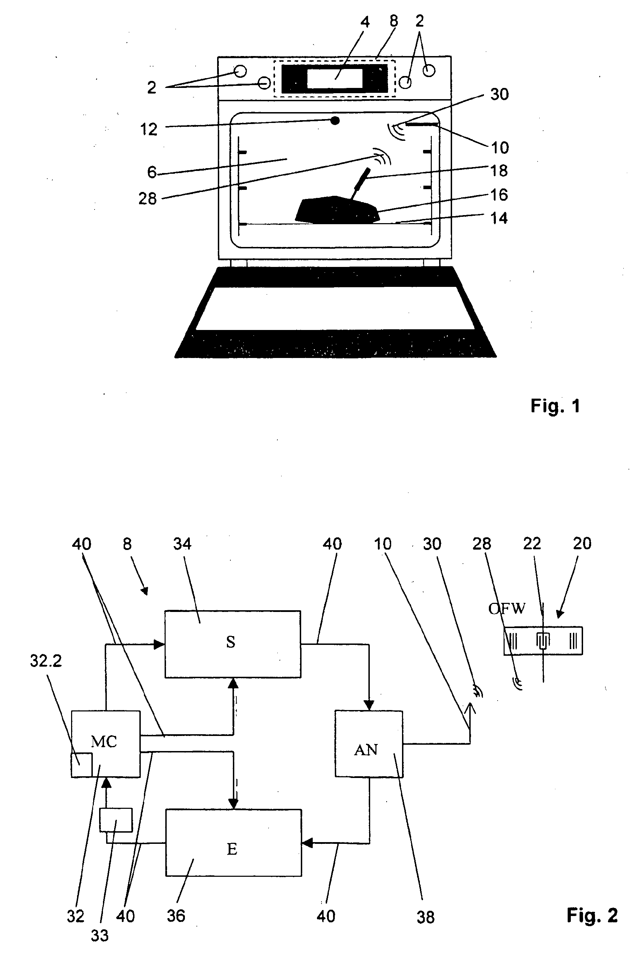

Fig. 1 zeigt ein als Backofen ausgebildetes Haushaltsgerät. Der Backofen weist eine Bedienblende mit Bedienelementen 2 und einer Anzeige 4 auf. Unterhalb der Bedienblende befindet sich ein als Garraum ausgebildeter Behandlungsraum 6. Hinter der Bedienblende ist eine Haushaltsgerätesteuerung 8 angeordnet. Eine mit der Haushaltsgerätesteuerung 8 elektrisch leitend verbundene kombinierte Sende- und Empfangsantenne 10 ragt in den Garraum 6 hinein. Alternativ hierzu wäre es auch möglich, voneinander getrennte Sende- und Empfangsantennen zu verwenden. Ferner ist in dem Garraum 6 eine Garraumbeheizung 12 angeordnet. Ein auf einem Gargutträger 14 abgelegtes Gargut 16 ist auf dem Fachmann bekannte Weise in den Garraum 6 einschiebbar. In das als Fleischstück ausgebildete Gargut 16 ist ein als Temperaturmesssonde ausgebildeter Garspieß 18 eingesteckt. In den Garspieß 18 ist ein in Fig. 2 näher dargestelltes Oberflächenwellenbauelement 20 integriert, das mit einer Garspießantenne 22 elektrisch leitend verbunden ist. Zwischen der kombinierten Sende- und Empfangsantenne 10 und der Garspießantenne 22 werden elektrische Signale auf dem Fachmann bekannte Weise drahtlos ausgetauscht. Dies ist in den Fig. 1 und 2 durch gekrümmte Linien 28 und 30 angedeutet.

In Fig. 2 ist der prinzipielle Aufbau der Haushaltsgerätesteuerung 8 und der Garspießantenne 22 gezeigt. Die Haushaltsgerätesteuerung 8 weist eine zentrale Recheneinheit 32 mit einem Speicher 32.2, eine Auswerteschaltung 33 und die kombinierte Sende- und Empfangsantenne 10 auf. Zwischen der zentralen Recheneinheit 32 und der kombinierten Sende- und Empfangsantenne 10 ist ferner ein Sender 34 mit einer Einstelleinrichtung zur Einstellung der Sendeleistung, ein Empfänger 36 mit einer Einstelleinrichtung zur Einstellung der Empfindlichkeit und ein Antennenanpassungsnetzwerk 38 angeordnet. Das Zusammenwirken der einzelnen Bauteile der Haushaltsgerätesteuerung 8 ist durch Pfeile 40 symbolisiert.

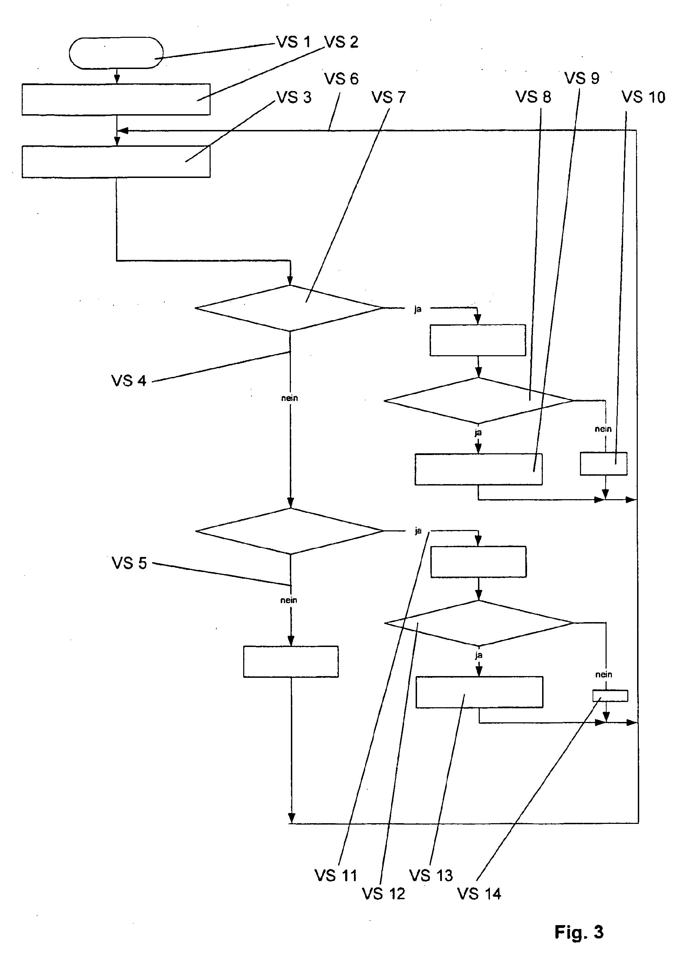

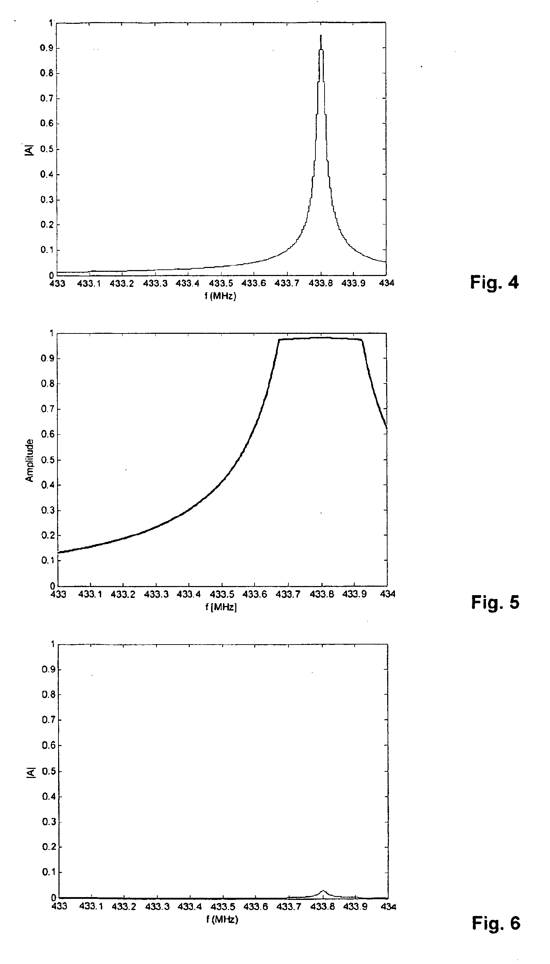

Anhand von Fig. 3 und den weiteren Figuren 4 bis 6 soll nun das erfindungsgemäße Verfahren näher erläutert werden.

Das in Fig. 3 dargestellte Ablaufschema zeigt die einzelnen Verfahrensschritte eines Ausführungsbeispiels des erfindungsgemäßen Verfahrens. Nachdem der Benutzer beispielsweise durch Einschalten des Haushaltsgeräts den ersten Messdurchlauf gestartet hat, Verfahrensschritt 1, kurz VS 1, wird die Gesamtempfindlichkeit der Haushaltsgerätesteuerung 8 automatisch auf den maximal möglichen Wert eingestellt; siehe auch VS 2. Das heißt, dass sowohl die Sendeleistung des Senders 34 wie auch die Empfindlichkeit des Empfängers 36 zu Anfang auf den jeweils maximal möglichen Wert eingestellt ist.

Der Messdurchlauf ist gestartet, so dass in der Haushaltsgerätesteuerung 8 auf dem Fachmann bekannte Weise hochfrequente elektrische Signale erzeugt und mittels der kombinierten Sende-und Empfangsantenne 10 in Richtung der Garspießantenne 22 als elektromagnetische Wellen abgestrahlt werden. Die von der Garspießantenne 22 zurückgestrahlten Wellen werden von der kombinierten Sende- und Empfangsantenne 10 empfangen und an die Auswerteschaltung 33 weitergeleitet. Um nun von den empfangenen elektrischen Signalen auf die Garguttemperatur zu schließen, wird pro Temperaturmessung, also pro Messdurchlauf, ein vorher festgelegtes Frequenzband, beispielsweise von 433 MHz bis 434 MHz durchlaufen. Nacheinander werden elektrische Signale mit voneinander verschiedenen Frequenzen, beispielsweise in 5 kHz Schritten, aus dem Frequenzband in der Haushaltsgerätesteuerung 8 erzeugt, als elektromagnetische Wellen an die Garspießantenne 22 abgestrahlt und die davon zurückgestrahlten elektromagnetischen Wellen wiederum in elektrische Signale umgewandelt. Siehe auch VS 3. Hierbei zu beachten ist, dass das Frequenzband für die Messdurchläufe je nach Anwendungsfall derart festgelegt ist, dass für alle möglichen Betriebszustände des Haushaltsgeräts oder dergleichen gewährleistet ist, dass die von der zu messenden physikalischen Größe, beispielsweise hier die Temperatur, abhängige Resonanzfrequenz innerhalb des für die Messdurchläufe ausgewählten Frequenzbandes liegt.

Die Signalpegel der an die Haushaltsgerätesteuerung 8 zurückgestrahlten und durch die kombinierte Sende- und Empfangsantenne 10 empfangenen elektrischen Signale werden in der Auswerteschaltung 33 gemessen und bei dem vorliegenden Ausführungsbeispiel aufsummiert. Der dann vorliegende und als Summenwert ausgebildete Kennwert wird in der Auswerteschaltung 33 mit vorher festgelegten und in dem Speicher 32.2 der zentralen Recheneinheit 32 abgespeicherten Grenzwerten verglichen. Diese Grenzwerte, nämlich ein unterer Grenzwert und ein oberer Grenzwert, sind stark von der Gesamtanordnung, also dem gesamten Haushaltsgerät, abhängig, so dass sich die konkreten Werte von Haushaltsgerät zu Haushaltsgerät und auch bei einem Haushaltsgerät, also beispielsweise von Backofentyp zu Backofentyp, voneinander stark unterscheiden.

Ergibt der Vergleich, dass der Summenwert größer als der untere Grenzwert und kleiner als der obere Grenzwert ist, wird die Qualität des Messdurchlaufs als für die weitere Verwendung für den Normalbetrieb des Haushaltsgeräts als ausreichend festgestellt. Siehe auch VS 4 und VS 5.

Ein derartiger, qualitativ ausreichender Verlauf der Signalpegel in Abhängigkeit der Sendefrequenz ist beispielhaft in Fig. 4 dargestellt.

Aus dem größten Signalpegel der vorliegenden elektrischen Signale und der diesem zugeordneten Sendefrequenz, bei der es sich um die Resonanzfrequenz handelt, wird dann auf dem Fachmann bekannte Weise indirekt die Garguttemperatur ermittelt.

Der Messdurchlauf kann für den Normalbetrieb verwendet werden; die auf diese Weise ermittelte Garguttemperatur wird für den weiteren Programmablauf, beispielsweise eine Ist-Temperaturanzeige auf der Anzeige 4, verwendet.

In der Regel handelt es sich bei der Erfassung der Ist-Temperatur um einen kontinuierlichen Vorgang, der während des gesamten Garvorgangs durchgeführt wird. Entsprechend wird hier ein erneuter Messdurchlauf mit den bereits vorliegenden Einstellungen für die Sendeleistung und die Empfindlichkeit gestartet. Siehe auch VS 6.

Alternativ dazu wäre es auch denkbar, dass der Messdurchlauf auf eine andere dem Fachmann bekannte Weise, beispielsweise durch einen automatischen Programmstart, initiiert wird.

Abweichend von dem in Fig. 4 beispielhaft dargestellten Fall können nachteilige Kopplungseigenschaften dazu führen, dass von der kombinierten Sende- und Empfangsantenne 10 ein nur sehr schwaches oder ein zu starkes elektrisches Signal empfangen wird.

Zuerst wird bei jedem Messdurchlauf verglichen, ob der aktuelle Summenwert größer als der abgespeicherte obere Grenzwert ist; siehe VS 7. Siehe hierzu auch Fig. 5, in der der Verlauf der Signalpegel in Abhängigkeit der Sendefrequenz im Falle einer Übersteuerung gezeigt ist. Ist dies der Fall, wird überprüft, ob die Sendeleistung und die Empfindlichkeit jeweils größer als der jeweilige Minimalwert sind; siehe auch VS 8. Sofern zumindest entweder die Sendeleistung oder die Empfindlichkeit dieses Kriterium erfüllt, wird -sofern möglich- die Sendeleistung, die Empfindlichkeit oder beide um einen vorher festgelegten Wert verringert; siehe auch VS 9. Danach wird ein neuer Messdurchlauf gestartet, ohne das ein Benutzereingriff erforderlich ist; siehe VS 6.

In dem anderen Fall, also wenn keine der vorgenannten Verringerungen mehr möglich ist, wird eine Fehlermeldung, beispielsweise über die Anzeige 4, ausgegeben. Siehe auch VS 10.

Ergibt der oben genannte Vergleich, dass der Summenwert nicht nur kleiner als der obere Grenzwert, siehe auch VS 4, sondern auch kleiner als der untere Grenzwert ist, siehe auch VS 11, liegt eine Untersteuerung vor; siehe hierzu auch Fig. 6, in der der Verlauf der Signalpegel in Abhängigkeit von der Sendefrequenz im Falle einer Untersteuerung gezeigt sind. In dem Fall einer Untersteuerung wird geprüft, ob die Sendeleistung und die Empfindlichkeit jeweils kleiner als der jeweilige Maximalwert sind; siehe auch VS 12. Sofern zumindest entweder die Sendeleistung oder die Empfindlichkeit dieses Kriterium erfüllt, wird -sofern möglich- die Sendeleistung, die Empfindlichkeit oder beide um einen vorher festgelegten Wert erhöht; siehe auch VS 13. Danach erfolgt ein neuer Messdurchlauf.

In dem anderen Fall, also wenn keine der vorgenannten Erhöhungen mehr möglich ist, wird eine Fehlermeldung, beispielsweise über die Anzeige 4, ausgegeben. Siehe auch VS 14.

Alternativ zu dem vorgenannten Ausführungsbeispiel besteht auch die Möglichkeit, als Kennwert anstelle des Summenwerts einen Wert zu verwenden, der wie folgt aus den Signalpegeln und den zugeordneten Sendefrequenzen gebildet ist:

Zuerst wird aus den Signalpegeln und den zugeordneten Sendefrequenzen des aktuellen Messdurchlaufs der größte Signalpegel und die zugeordnete Sendefrequenz, nämlich die Resonanzfrequenz ermittelt. Danach wird eine Grenzsendefrequenz ermittelt, für die gilt, dass deren zugehöriger Signalpegel erstmals um ein vorher festgelegtes und abgespeichertes Signalpegelverhältnis niedriger als der größte Signalpegel liegt. Sollte der Fall vorliegen, dass der größte Signalpegel bei einer Sendefrequenz am Rand des verwendeten Frequenzbandes vorliegt, also die Resonanzfrequenz hier entweder 433 MHz oder 434 MHz betragen, gibt es entsprechend nur eine Grenzsendefrequenz. Aus der Differenz zwischen der so ermittelten Grenzsendefrequenz und der Resonanzfrequenz und dem größten Signalpegel wird ein Wertepaar gebildet. In Abhängigkeit des Wertepaares wird dann der alternative Kennwert ermittelt. Beispielsweise wäre es möglich, den Quotienten aus der Differenz und dem größten Signalpegel als Kennwert zu verwenden. Andere dem Fachmann bekannte Maßnahmen sind ebenfalls denkbar. Üblicher ist jedoch der Fall, dass die Resonanzfrequenz zwischen den beiden Grenzen des Frequenzbandes liegt, da -wie bereits oben erläutert- das Frequenzband derart ausgewählt ist, dass für alle möglichen Betriebszustände des Haushaltsgeräts gewährleistet ist, dass die von der zu messenden physikalischen Größe, hier die Temperatur, abhängige Resonanzfrequenz innerhalb des für die Messdurchläufe ausgewählten Frequenzbandes liegt. Dann existieren zwei Grenzsendefrequenzen, für die das vorgenannte Kriterium erfüllt ist.

Sofern es sich um zwei Grenzsendefrequenzen handelt, auf die das oben genannte Kriterium zutrifft, ist es sinnvoll die beiden Differenzen zwischen der jeweiligen Grenzsendefrequenz und der Resonanzfrequenz vorher aufzusummieren und nachfolgend durch zwei zu teilen, um so eine mittlere Differenz zu erhalten.

Das erfindungsgemäße Verfahren ist nicht auf die hier erläuterten Ausführungsbeispiele beschränkt. Beispielsweise wäre es auch bei anderen Haushaltsgeräten einsetzbar, bei denen drahtlos elektrische Signale übertragen werden. Darüber hinaus wäre es auch denkbar, das die Garspießantenne oder ein vergleichbares Bauteil bei einem anderen Haushaltsgerät ein aktives Element ist, so dass die Haushaltsgerätesteuerung keinen Sender und keine Sendeantenne, sondern lediglich eine Empfangsantenne aufweisen muss. Auch ist das erfindungsgemäße Verfahren nicht auf die Messung einer Temperatur, wie beispielsweise der Temperatur eines Garguts, beschränkt. Vielmehr ist das Verfahren auf die Messung auch von anderen physikalischen Größen, wie beispielsweise Druck, anwendbar.

Wie bereits oben erläutert, ist zu beachten, dass das Frequenzband für die Messdurchläufe je nach Anwendungsfall derart festgelegt ist, dass für alle möglichen Betriebszustände des Haushaltsgeräts oder dergleichen gewährleistet ist, dass die von der zu messenden physikalischen Größe, beispielsweise hier die Temperatur, abhängige Resonanzfrequenz innerhalb des für die Messdurchläufe ausgewählten Frequenzbandes liegt. Ist das Frequenzband so breit ausgewählt worden, dass die Resonanzfrequenz immer sicher innerhalb des Frequenzbandes und nicht an dessen Rand liegt, kann alternativ zu dem vorgenannten Auswerteverfahren bezüglich des alternativen Kennwerts ein Verfahren angewendet werden, bei dem aus der Differenz zwischen den ermittelten Grenzsendefrequenzen, links und rechts der Resonanzfrequenz, und dem größten Signalpegel ein Wertepaar gebildet wird. In Abhängigkeit des Wertepaares wird dann der alternative Kennwert ermittelt. Beispielsweise wäre es möglich, den Quotienten aus der Differenz und dem größten Signalpegel als Kennwert zu verwenden. Andere dem Fachmann bekannte Maßnahmen sind ebenfalls denkbar.

## Patentansprüche

1. Verfahren zur Erkennung eines Fehlers in einem Messdurchlauf, bei dem eine Abfolge von elektrischen Signalen während des Durchlaufens eines vorher festgelegten Frequenzbandes drahtlos von einem Sender (10, 22) zu einem Empfänger (10) einer elektrischen Auswerteschaltung (32.1) einer Haushaltsgerätesteuerung (8) übermittelt wird, wobei das Verfahren die folgenden Verfahrensschritte in der angegebenen Reihenfolge aufweist:
- Messung der Signalpegel und Bildung eines Kennwertes aus den Signalpegeln in der Auswerteschaltung (32.1),
- Vergleich des Kennwertes mit einem oberen und einem unteren Grenzwert und
- Bestimmung der Qualität des Messdurchlaufs in Abhängigkeit des Vergleichs.

2. Verfahren nach Anspruch 1,
**dadurch gekennzeichnet,**
**dass** als Kennwert aus den Signalpegeln der Integral- oder Summenwert gebildet wird.

3. Verfahren nach Anspruch 1,
**dadurch gekennzeichnet,**
**dass** der Kennwert aus einem Wertepaar aus den Signalpegeln und den zugeordneten Sendefrequenzen wie folgt gebildet wird:
- Ermittlung des größten Signalpegels und der zugeordneten Resonanzfrequenz,
- Ermittlung einer Grenzsendefrequenz, für die gilt, dass deren zugehöriger Signalpegel erstmals um ein vorher festgelegtes und abgespeichertes Signalpegelverhältnis niedriger als der größte Signalpegel liegt,
- Ermittlung der Differenz zwischen der Grenzsendefrequenz und der Resonanzfrequenz,
- Bildung des Wertepaares aus dem größten Signalpegel und der vorgenannten Differenz und
- Bildung des Kennwertes in Abhängigkeit des Wertepaares.

4. Verfahren nach einem der Ansprüche 1 bis 3,
**dadurch gekennzeichnet,**
**dass** wenn der Kennwert den unteren Grenzwert unterschreitet
- die Empfindlichkeit des Empfängers (36) und/oder die Sendeleistung des Senders (34) für einen weiteren Messdurchlauf erhöht wird/werden oder
- eine optische oder akustische Fehlermeldung an den Benutzer ausgegeben wird, wenn die Empfindlichkeit des Empfängers (36) und/oder die Sendeleistung des Senders (34) auf den jeweils maximalen Wert eingestellt sind.

5. Verfahren nach einem der Ansprüche 1 bis 3,
**dadurch gekennzeichnet,**
**dass** wenn der Kennwert den oberen Grenzwert überschreitet
- die Empfindlichkeit des Empfängers (36) und/oder die Sendeleistung des Senders (34) für einen weiteren Messdurchlauf reduziert wird/werden oder
- eine optische oder akustische Fehlermeldung an den Benutzer ausgegeben wird, wenn die Empfindlichkeit des Empfängers (36) und/oder die Sendeleistung des Senders (34) auf den jeweils minimalen Wert eingestellt sind.

6. Verfahren nach einem der Ansprüche 1 bis 3,
**dadurch gekennzeichnet,**
**dass** der Messdurchlauf für den Normalbetrieb des Haushaltsgeräts verwendet wird, wenn der Kennwert im Bereich zwischen dem unteren und dem oberen Grenzwert liegt.

## Claims

1. Method for detecting an error in a measurement cycle, in which a sequence of electrical signals is wirelessly transmitted from a transmitter (10, 22) to a receiver (10) of an electric evaluation circuit (32.1) of a household appliance controller (8) as the system sweeps through a predetermined frequency band, wherein the method comprises the following method steps in the specified order:
- measuring the signal levels and calculating a parameter from the signal levels in the evaluation circuit (32.1),
- comparing the parameter to an upper and a lower limit, and
- determining the quality of the measurement cycle as a function of the comparison.

2. Method according to claim 1, **characterised in that** the integral or cumulative value is calculated from the signal levels as the parameter.

3. Method according to claim 1, **characterised in that** the parameter is calculated as follows from the signal levels and the associated transmission frequencies:
- determining the highest signal level and the associated resonant frequency,
- determining a transmission frequency limit, the signal level associated therewith being, for the first time, lower than the highest signal level by a predetermined and stored signal level ratio,
- determining the difference between the transmission frequency limit and the resonant frequency,
- calculating a pair of values from the highest signal level and the above-mentioned difference, and
- calculating the parameter as a function of the pair of values.

4. Method according to any one of claims 1 to 3, **characterised in that**, if the parameter falls below the lower limit,
- the sensitivity of the receiver (36) and/or the transmission power of the transmitter (34) is/are increased in a subsequent measurement cycle or
- a visual or acoustic error notification is issued to the user if the sensitivity of the receiver (36) and/or the transmission power of the transmitter (34) is/are set to their respective maximum values.

5. Method according to any one of claims 1 to 3, **characterised in that**, if the parameter exceeds the upper limit,
- the sensitivity of the receiver (36) and/or the transmission power of the transmitter (34) is/are reduced in a subsequent measurement cycle or
- a visual or acoustic error notification is issued to the user if the sensitivity of the receiver (36) and/or the transmission power of the transmitter (34) is/are set to their respective minimum values.

6. Method according to any one of claims 1 to 3, **characterised in that** the measurement cycle is used for the normal operation of the household appliance if the parameter is within the range between the lower and upper limits.

## Revendications

1. Procédé de détection d'une erreur dans un cycle de mesure, dans lequel une succession de signaux électriques est, pendant la traversée d'une bande de fréquence définie préalablement, transmise sans fil à partir d'un émetteur (10, 22) vers un récepteur (10) d'un circuit d'analyse (32.1) électrique d'une commande d'appareil électroménager (8), le procédé présentant les étapes de procédé suivantes dans l'ordre de succession indiqué :
- mesure des niveaux de signaux et formation d'une valeur caractéristique à partir des niveaux de signaux dans le circuit d'analyse (32.1),
- comparaison de la valeur caractéristique avec une valeur limite supérieure et une valeur limite inférieure et
- définition de la qualité du cycle de mesure en fonction de la comparaison.

2. Procédé selon la revendication 1,
**caractérisé en ce que**
la valeur intégrale ou cumulée est formée en tant que valeur caractéristique à partir des niveaux de signaux.

3. Procédé selon la revendication 1,
**caractérisé en ce que**
la valeur caractéristique est formée comme suit à partir d'une paire de valeurs issue des niveaux de signaux et des fréquences d'émission affectées :
- détermination du niveau de signaux le plus grand et de la fréquence de résonance affectée,
- détermination d'une fréquence d'émission limite pour laquelle il est constaté que son niveau de signaux correspondant est pour la première fois inférieur, selon un rapport de niveaux de signaux stipulé préalablement et enregistré, au niveau de signaux le plus grand,
- détermination de la différence entre la fréquence d'émission limite et la fréquence de résonance,
- formation de la paire de valeurs à partir du niveau de signaux le plus grand et de la différence précitée et
- formation de la valeur caractéristique en fonction de la paire de valeurs.

4. Procédé selon une des revendications 1 à 3,
**caractérisé en ce que**,
quand la valeur caractéristique passe au-dessous de la valeur limite inférieure,
- la sensibilité du récepteur (36) et/ou la puissance d'émission de l'émetteur (34) pour un autre cycle de mesure est/sont augmentées ou
- un message d'erreur optique ou acoustique est délivré à l'utilisateur quand la sensibilité du récepteur (36) et/ou la puissance d'émission de l'émetteur (34) sont réglées sur la valeur maximale respective.

5. Procédé selon une des revendications 1 à 3,
**caractérisé en ce que**,
quand la valeur caractéristique passe au-dessus de la valeur limite supérieure,
- la sensibilité du récepteur (36) et/ou la puissance d'émission de l'émetteur (34) pour un autre cycle de mesure est/sont réduites ou
- un message d'erreur optique ou acoustique est délivré à l'utilisateur quand la sensibilité du récepteur (36) et/ou la puissance d'émission de l'émetteur (34) sont réglées sur la valeur minimale respective.

6. Procédé selon une des revendications 1 à 3,
**caractérisé en ce que**
le cycle de mesure est utilisé pour le fonctionnement normal de l'appareil électroménager quand la valeur caractéristique se situe dans la plage entre la valeur limite inférieure et la valeur limite supérieure.
